# EUROPEAN PATENT APPLICATION

(11) **EP 4 830 934 A2**
(43) Date of publication of application: **28.10.2026**
(21) Application number: 26201659.5
(22) Date of filing: 15.09.2021
(51) Int. Cl.: B41J 3/36

(54) **NAMEBAR PRINTER ASSEMBLY FOR SPORTING EQUIPMENT**

(30) Priority: 15.09.2020 US 202063078461 P
(62) Document number(s) of the earlier application(s) in accordance with Art. 76 EPC: 21867986.8 / 4 214 696
(71) Applicant: Sport Maska Inc., Montréal, Québec H4R 3L3 (CA)
(72) Inventor: GOSSELIN, Pascal, Delson Quebec, J5B 2C2 (CA); CHAMBERT, Martin, Piedmont Quebec, J0R 1K0 (CA); MASSIE-HAMEL, Nicolas, Auteuil Quebec, H7H 1R3 (CA)
(74) Representative: Weickmann & Weickmann PartmbB

(57) **Abstract**

A method of manufacturing a piece of sporting equipment is provided. A namebar is affixed to a surface of the sporting equipment, the namebar being blank and adapted to receive thereon a printed design. A solvent-based clear coat is applied to the surface of the sporting equipment including the namebar, subsequent to the affixing of the namebar. A removable covering is applied over the namebar, subsequent to the applying of the solvent-based clear coat. Then, a gripping material is applied to at least a portion of the surface of the sporting equipment including the removable covering over the namebar, subsequently to the applying of the removable covering.

## Description

### CROSS-REFERENCE TO RELATED APPLICATIONS

This application claims priority from United States patent application 63/078,461 filed on September 15, 2020, the entire contents of which are incorporated herein by reference.

### TECHNICAL FIELD

This disclosure generally relates to the field of customized sporting equipment, including hockey sticks and other equipment.

### BACKGROUND

Sporting equipment, for instance hockey sticks, may be customized for individual athletes or teams, for example with printed names, words, graphics, designs, etc. for a variety of reasons such as for identification purposes or for team unity. Such customization may often take place during the manufacturing process of the sporting equipment, which can be costly and time consuming. In addition, retailers may wish to keep non-customized equipment in stock as their customers would prefer to have their equipment customized upon purchasing.

### SUMMARY

In one aspect, there is provided a method of manufacturing a piece of sporting equipment, comprising: affixing a namebar to a surface of the sporting equipment, the namebar being blank and adapted to receive thereon a printed design; applying a solvent-based clear coat to the surface of the sporting equipment including the namebar, subsequent to the affixing of the namebar; applying a removable covering over the namebar, subsequent to the applying of the solvent-based clear coat; and then applying a gripping material to at least a portion of the surface of the sporting equipment including the removable covering over the namebar, subsequently to the applying of the removable covering.

The method as defined above and described herein may further include, in whole or in part, and in any combination, one or more of the following features and/or steps.

Affixing the namebar to the surface of the sporting equipment may also include affixing the namebar to a shaft of a hockey stick.

Affixing the namebar to the shaft of the hockey stick may further include affixing a lower edge of the namebar at a position between 10 and 100 centimeters from an end of the shaft of the hockey stick.

The method of manufacturing as defined herein may also comprise removing the removable covering subsequently to the applying of the gripping material to the surface of the sporting equipment.

Applying the solvent-based clear coat to the surface of the sporting equipment may also include applying the solvent-based clear coat having urethane as an component thereof.

Applying the solvent-based clear coat to the surface of the sporting equipment may also include applying the solvent-based clear coat having a specific hardness of approximately 80D.

In another aspect, there is provided a hockey stick comprising: a shaft extending between an upper end and a lower end, the shaft including an outer surface having a namebar configured for acceptance of a printed design, the namebar disposed at a location on the outer surface of the shaft, the shaft further including a gripping material covering at least a portion of the outer surface excluding the location at which the namebar is disposed, wherein the namebar is free of the gripping material.

The hockey stick as defined above and described herein may further include, in whole or in part, and in any combination, one or more of the following features.

In a particular embodiment, the namebar is covered by a solvent-based clear coat.

In a particular embodiment, the solvent-based clear coat includes urethane as a component thereof.

In a particular embodiment, the solvent-based clear coat has a specific hardness of approximately 80D.

In a particular embodiment, the namebar has a rectangular shape.

In a particular embodiment, a lower edge of the namebar is disposed between 10 and 100 centimeters from one of the lower end and the upper end of the shaft.

In yet another aspect, there is provided an aligning device for a printing device configured for printing a design on a blank namebar on a surface of a piece of sporting equipment, the aligning device comprising: a body having a top surface, a bottom surface, and a cutout portion extending from the top surface to the bottom surface; and a pair of flanges extending outwardly from the bottom surface of the body, the pair of flanges configured for mounting the aligning device to the sporting equipment; wherein the top surface is configured for receiving the printing device and the cutout is positionable to expose the namebar to a nozzle of the printing device.

The aligning device as defined above and described herein may further include, in whole or in part, and in any combination, one or more of the following features.

In a particular embodiment, the body further includes outer walls extending from the top surface of the body, the outer walls configured for retaining the printing device in place.

In a particular embodiment, the top surface of the body includes ruled markings adjacent the cutout portion.

In a particular embodiment, the cutout portion has a generally rectangular shape with indentations along upper and lower edges of the cutout portion.

In still yet another aspect, there is provided a namebar printer assembly for printing a design via a printing device, the namebar printer assembly comprising: a piece of sporting equipment having a blank namebar on a surface thereof; and an aligning device having a cutout portion, fixing means for mounting the aligning device to the sporting equipment, and retaining means for retaining the printing device in place for printing, the fixing means operable to adjust the positioning of the aligning device relative to the namebar to align the cutout portion with the namebar, exposing the namebar to a nozzle of the printing device for printing the design.

The namebar printer assembly as defined above and described herein may further include, in whole or in part, and in any combination, one or more of the following features.

In a particular embodiment, the piece of sporting equipment is a hockey stick and the blank namebar is affixed to an outer surface on a shaft of the hockey stick.

In a particular embodiment, a lower edge of the blank namebar is affixed at a position between 20 and 100 centimeters from a lower end of the shaft of the hockey stick.

In a particular embodiment, the piece of sporting equipment is covered by a gripping material to a surface thereof excluding a location of the blank namebar.

In a particular embodiment, the blank namebar is covered by a solvent-based clear coat.

In a particular embodiment, the solvent-based clear coat includes urethane as a component thereof.

In a particular embodiment, the solvent-based clear coat has a specific hardness of approximately 80D.

In a particular embodiment, the blank namebar has a rectangular shape.

In a particular embodiment, the fixing means of the aligning device include a pair of flanges extending outwardly from a bottom surface of a body of the aligning device, the pair of flanges configured for mounting the aligning device to the piece of sporting equipment.

In a particular embodiment, the retaining means of the aligning device include outer walls extending from a top surface of a body of the aligning device, the outer walls configured for retaining the printing device in place.

In a particular embodiment, a top surface of a body of the aligning device includes ruled markings adjacent the cutout portion.

In a particular embodiment, the cutout portion has a generally rectangular shape with indentations along upper and lower edges of the cutout portion.

In a particular embodiment, the indentations along the upper and lower edges of the cutout portion have widths that generally coincide with the width of the blank namebar.

### BRIEF DESCRIPTION OF THE DRAWINGS

Fig. 1 is a perspective view of a namebar printer assembly
Fig. 2A is a side view of an exemplary hockey stick for the namebar printer assembly of Fig. 1;
Fig. 2B is an enlarged view of a blank namebar on the hockey stick of Fig. 2A;
Figs. 3A-3C are front, side and bottom schematic views, respectively, of a centering device for the namebar printer assembly of Fig. 1;
Figs. 4A-4B are side and rear views, respectively, of an exemplary printing device for the namebar printer assembly of Fig. 1;
Fig. 5A-5B are screenshot views of an exemplary display of the printing device of Figs. 4A-4B;
Figs. 6A-6C are front, enhanced front, and perspective rear views, respectively, of the centering device of Figs. 3A-3C mounted to the exemplary hockey stick of Figs. 2A-2B;
Fig. 7 is a perspective view of an exemplary application of the namebar printer assembly of Fig. 1;
Fig. 8 is a front view of the centering device of Figs. 3A-3C mounted to the exemplary hockey stick of Figs. 2A-2B with a printed namebar; and
Fig. 9 is a front view of exemplary erasing application of the printed namebar on the exemplary hockey stick of FIGS. 2A-2B.

### DETAILED DESCRIPTION

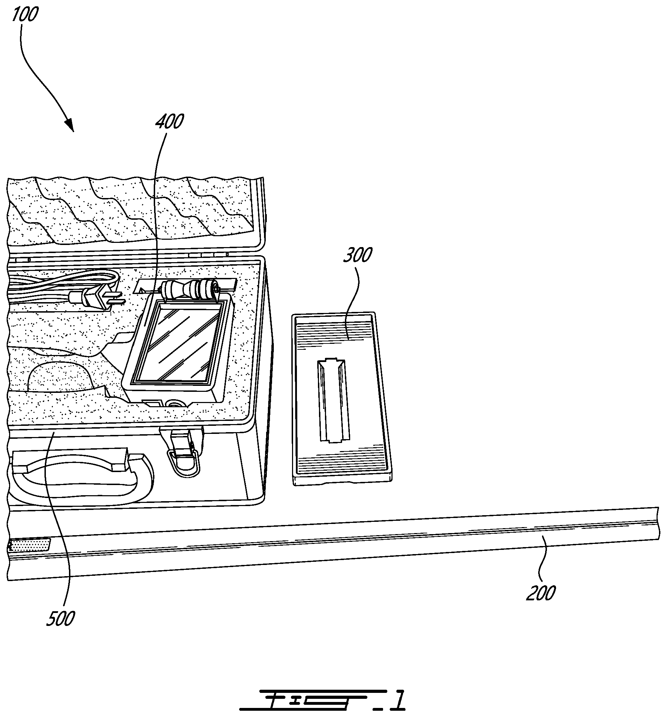

Referring to Fig. 1, a namebar printer assembly 100 for post-manufacturing customization is shown, according to an embodiment of the present disclosure. As shown in Fig. 1, although not the case in every embodiment, the assembly 100 includes a hockey stick 200 on which a name, word, logo, graphic or other such design is to be printed, an aligning device 300 to assist in printing the design in a desired location on the hockey stick 200, and a printing device 400 to be used to print the design on the hockey stick 200, here shown to be stored in an optional case or enclosure 500. While the assembly 100 in the depicted embodiment includes a hockey stick 200 on which a design is to be printed, in other cases the assembly 100 may be used to print one or more designs on other types of sporting equipment. In addition, the assembly 100 may be used to print one or more designs on equipment for other sports, such as lacrosse or soccer. According to the present disclosure, there are also shown various methods for using such a namebar printer assembly 100 for printing one or more designs on a piece of sporting equipment, such as a hockey stick 200, via an aligning device 300 and a printing device 400, as will be discussed in further detail below.

The phrase "post-manufacturing customization" as used herein refers to the fact that the printing of one or more names, labels and/or designs on the hockey stick 200 (or other sporting equipment) may occur at a subsequent time and/or location after the hockey stick 200 has been manufactured. For instance, a plurality of hockey sticks 200 may be manufactured in bulk by a manufacturer without any customizations and sent to a third party retailer. The retailer may then offer the hockey sticks for purchase to consumers, who may then choose to have their newly-purchased hockey stick 200 customized with one or more designs via the namebar printer assembly 100 described herein. Such customization may be done immediately by the retailer, or at another location such as a business specializing in such customizations. Other locations for such customization may be contemplated as well.

The phrase "design" used herein refers to one or more words, images and/or graphics to be printed on the hockey stick 200 (or other sporting equipment) via the printing device 400 in a post-manufacturing customization process as described herein. Such word(s) may include an athlete's name, surname, and/or nickname. Such word(s) may further or alternatively include a team name, team nickname, team slogan, city name, city nickname, province or state name, province or state nickname, and or country name or nickname. Combinations of the above or other word(s) may be chosen by an athlete or team to identify themselves. Other word(s) may be contemplated as well. Such images or graphics may include a team's logo or icon, an image of a team's mascot, an image of an athlete's country flag, etc. Other images may be contemplated as well.

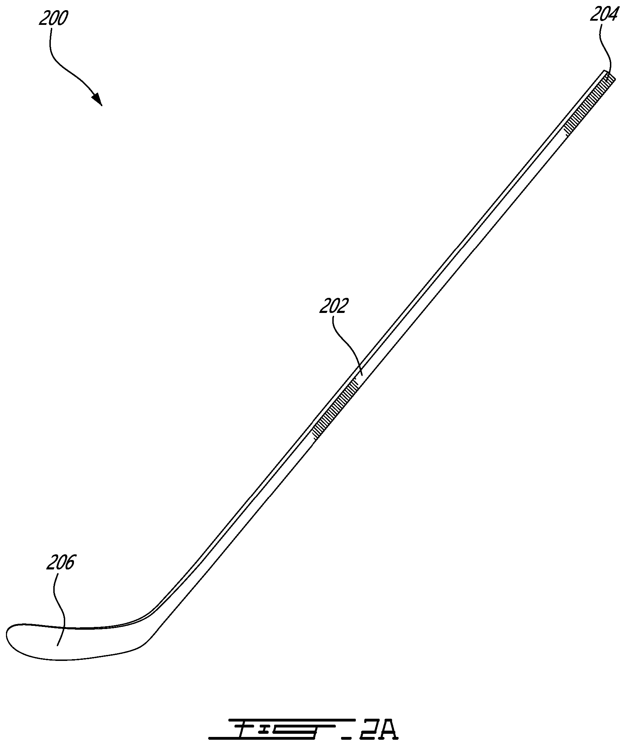

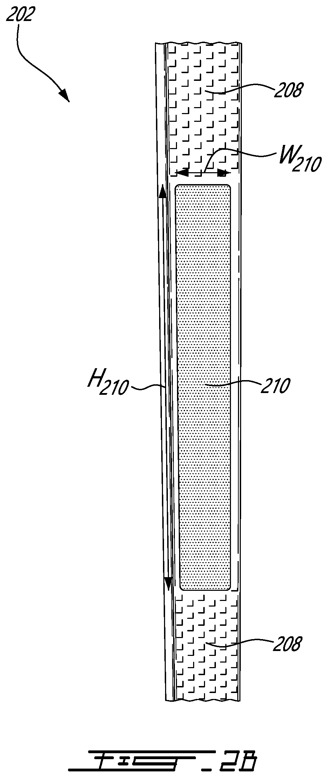

Referring to Figs. 2A-2B, there is shown an exemplary hockey stick 200 on which a design is to be printed. While Fig. 2A shows a left handed hockey stick, the assembly 100 may be used on a variety of hockey sticks of different brands, lengths, materials and shooting directions, in addition to other types of sporting equipment. The depicted stick 200 includes an elongated shaft 202, a handle 204 at a upper end of the shaft 202, and a blade 206 at a lower end of the shaft 202. The shaft 202 may have a rectangular cross-section with four outer sides and rounded corners. A grip surface 208 may be applied to the shaft 202 during the manufacturing process to aid a hockey player in grasping and manipulating the stick 200. As shown in Fig. 2B, the stick 200 includes a namebar 210 on which a design is to be printed. While the namebar 210 is shown to be on a front outer side of the shaft 202, in other embodiments the namebar 210 may be positioned on one of the other outer sides of the shaft 202.

The namebar 210 may have a rectangular shape (other shapes may be contemplated as well) and be made from or covered by any suitable material that is conducive to having a design printed on it by the printing device 400. In the shown embodiment, the namebar 210 is covered by a solvent-based clear coat that is applied to the shaft 202. Various clear coat applying means may be contemplated. In some cases, the solvent may include urethane and have a specific hardness of roughly 80D, although other materials and specific hardness' may be contemplated as well. In other cases, the namebar 210 may be a pre-fabricated strip with an adhesive underside to be applied to the shaft 202. In some embodiments, the namebar 210 may be applied to the shaft 202 during the manufacturing process of the hockey stick 200, while the printing of the design(s) on the namebar 210 may be done at a subsequent time, i.e. post-manufacturing, and/or at a different location.

The namebar 210 may include a namebar width W₂₁₀ and a namebar height H₂₁₀. In the shown case, the namebar width W₂₁₀ does not exceed an overall width of the front outer side of the shaft 202 on which the namebar 210 is located. In other cases, the namebar 210 may be applied to more than one outer side of the shaft 202, for instance in a 'wrapped-around' fashion, allowing designs to be printed on more than one side of the shaft 202. In other cases, additional namebars 210 can be positioned on the shaft 202, for instance multiple namebars 210 aligned on a same outer side of the shaft 202 and/or one or more namebars 210 on other outer sides of the shaft 202, to allow for additional designs to be printed. In some cases, the lower edge of the namebar 210 may be positioned between ten and one hundred centimeters from one of the ends of the shaft. In one particular embodiment, the namebar 210 is located between 20 and 100 centimeters from the lower end of the shaft 202, where the shaft 202 meets the blade 206. Other relative positions for the namebar may be contemplated as well. The namebar height H₂₁₀ may be standardized across a variety of hockey sticks 200, while in other cases certain hockey sticks 200 may be provided with a namebar 210 with a greater namebar height H₂₁₀ to accommodate a larger design, for instance to accommodate a longer team name or player name. Other namebar heights H₂₁₀ may be contemplated as well.

In some cases, the namebar 210 may be applied to the shaft 202 before the grip 208. In such cases, a strip of protective adhesive tape (or another such covering) may be applied to the namebar 210 to cover it while the grip 208 is applied, ensuring the surface of the namebar 210 is not compromised by such a process. Such tape may be left covering the namebar 210 until such a point where a design is to be printed on the namebar 210, as will be discussed in further detail below. As such, the covering may protect the namebar 210, for instance the solvent-based clear coat, from any stray objects or materials that may compromise the surface of the namebar 210, potentially damaging it or hampering its ability to have one or more designs printed on it. Other protective coverings may be contemplated as well.

An exemplary method of manufacturing for a piece of sporting equipment, for instance hockey stick 200, will now be described. A namebar 210 is affixed to a surface of the sporting equipment, for instance an outer surface of a shaft 202 of hockey stick 200. The colour, shape and material of the namebar 210 may vary. After the namebar 210 is affixed to the surface of the sporting equipment, a solvent-based clear coat is applied to the surface of the sporting equipment, for instance the outer surface of the shaft 202, covering the namebar 210 in said process. The solvent-based clear coat may be operable to protect the various underlying visual design features on the surface of the sporting equipment as well as the namebar 210. After the solvent-based clear coat is applied to the surface of the sporting equipment, a removable covering is applied to the namebar 210. In some embodiments the removable covering may have a similar size and shape to the namebar 210, for instance having a width about the same as the namebar width W₂₁₀ and a height about the same as the namebar height H₂₁₀. In other embodiments the removable covering may be over-dimensioned relative to the namebar 210. After the removable covering is applied to the namebar 210, a gripping material 208 is applied to the surface of the sporting equipment, for instance to the outer surface of the shaft 202 of the hockey stick 200. Such gripping material 208 may, for instance, aid a hockey player in gripping the shaft 202 of the stick 200. The nature of the gripping material 208 may vary, and it may cover a portion or all of the surface of the shaft 202 except for the namebar 210 as the namebar 210 is covered by the removable covering. After the gripping material 208 is applied to the surface of the sporting equipment, the removable covering may be removed from the namebar 210, exposing the namebar 210 having no gripping material 208 thereupon. In some cases, the removable covering may be removed immediately after the gripping material 208 is applied. In other cases, the removable covering may be left on the namebar 210 until a time at which the namebar 210 is ready be printed upon, as will be discussed in further detail below.

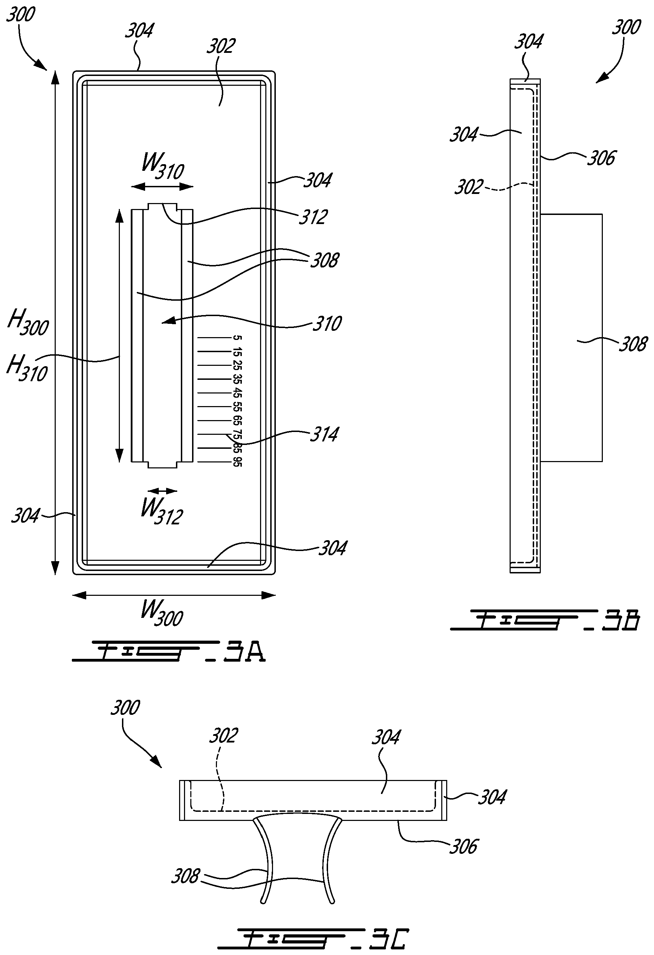

Referring now to Figs. 3A-3C, there is shown an aligning device 300 to assist in printing a design in a desired location on the hockey stick 200. As will be discussed in further detail below, the aligning device 300, also referred to as a centering device or a jig, is positionable on the hockey stick 200 to ensure the printing device 400 prints the desired one or more designs at the desired location on the namebar 210. For instance, the aligning device 300 may allow the desired design to be printed at a centered location on the namebar 210 with respect to the namebar width W₂₁₀. The shown aligning device 300 includes a rectangular top surface 302 with four outer walls 304 extending from the edges thereof, although other shapes for the top surface 302 of the aligning device 300 may be contemplated as well. The aligning device 300 further includes a bottom surface 306 with a pair of flanges 308 extending therefrom. The shown flanges 308 are curved, although other shapes may be contemplated as well. The flanges 308 may be flexible while providing some stiffness when flexed, i.e. separated. A cutout portion 310 extends through the top surface 302 to the bottom surface 306, the cutout portion 310 flanked on either side by the flanges 308.

As will be discussed in further detail below, the aligning device 300 is mountable on the hockey stick 200 with the cutout portion 310 aligned with the namebar 210 and the flanges 308 retaining the aligning device 300 in place. The flanges may thus act as fixing means, retaining the aligning device 300 to the hockey stick 200. In the shown embodiment, the cutout portion 310 is generally rectangular and has a cutout portion width W₃₁₀ and a cutout portion height H₃₁₀. In the shown embodiment, the cutout portion height H₃₁₀ is greater than the namebar height H₂₁₀ to ensure the cutout portion 310 may accommodate the entire design(s) to be printed on the namebar 210. Upper and lower edges of the cutout portion 310 may include additional alignment cutouts 312, also referred to as indentations, each having an alignment cutout width W₃₁₂. In the shown embodiment, although not necessarily the case in all embodiments, the alignment cutouts 312 are centrally positioned relative to the cutout portion width W₃₁₀. In addition, in some embodiments the alignment cutout width W₃₁₂ may generally correspond to the namebar width W₂₁₀ to facilitate alignment. As will be discussed in further detail below, the top surface 302 of the aligning device 300 may further include ruled markings 314 to assist in aligning the aligning device 300 on the hockey stick 200 for printing. In the shown embodiment, although not necessarily the case in all embodiments, the ruled markings 314 are graded in millimetres.

The aligning device 300 may include an aligning device width W₃₀₀ and an aligning device height H₃₀₀. In some cases, the aligning device width W₃₀₀ is selected so that the printing device 400 may be snugly received within lateral outer walls 304 of the aligning device 300 during the printing process, as will be discussed in further detail below. In addition, the positioning of the cutout portion 310 with respect to the aligning device width W₃₀₀ may be selected based on the sizing of the corresponding printing device 400. The aligning device 300 may thus frame the blank namebar 210 within the cutout portion 310 in a centered fashion in preparation for printing, regardless of the length or size of the design to be printed.

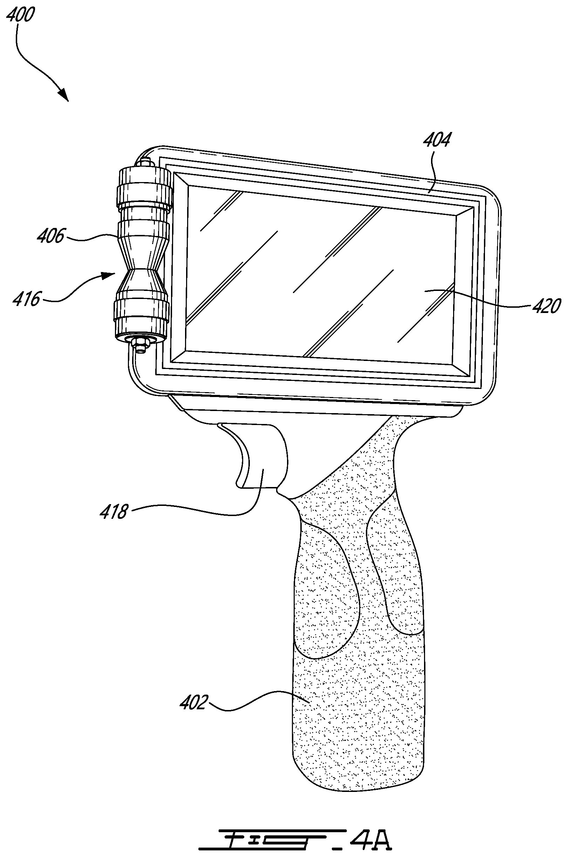

Referring now to Figs. 4A-4B, an exemplary printing device 400 for use with the assembly 100 is shown. In some cases, the printing device is a portable inkjet printer such as the shown Meenjet^{TM} M6 Handheld Smart Inkjet Printer, although other printing devices for printing one or more designs on the hockey stick 200 may be used as well. In some cases, the printing device 400 may be purchased in a preassembled state from a manufacturer or a third party vendor, and arrive in an enclosure or case 500 (see FIG. 1) along with a variety of accessories. The shown printing device 400 includes a handle 402, a casing 404, and rollers 406 to assist in printing the design(s) on the hockey stick 200. The printing device 400 may further include an ink cartridge slot 408 for receiving one or more ink cartridges (not shown). In some embodiments, the ink cartridge slot 408 may be configured for receiving a Meenjet^{TM} JS12 - Black ink cartridge, although other models and/or ink colours may be contemplated as well. The received ink cartridge(s) used for printing may be configured for one-time use or may be re-fillable and reusable. In some cases, the printing device 400 may receive a plurality of ink cartridges of different colours to enable the printing of multi-coloured designs.

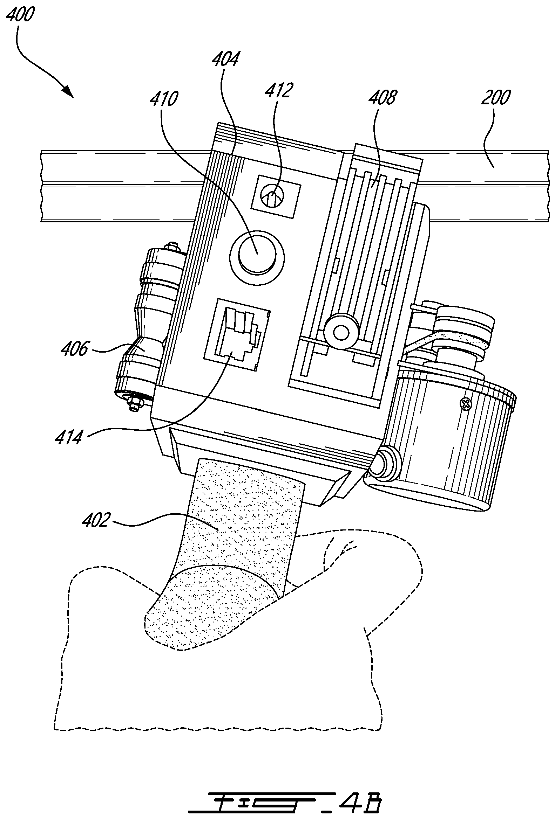

As can be seen in Fig. 4B, the printing device 400 may include a power button 410 to turn the device 400 on and off and various ports such as a charging port 412 and a communication port 414 (illustratively an Ethernet port). The printing device 400 is configured to eject ink from the received ink cartridge(s) through one or more nozzles 416. Such ejection may be activated by a user pressing and releasing a trigger 418, although other activation means may be contemplated as well. The printing device further includes a display 420 for controlling and interacting with the printing device 400. Other user interfaces for controlling and interacting with the printing device 400 may be contemplated as well.

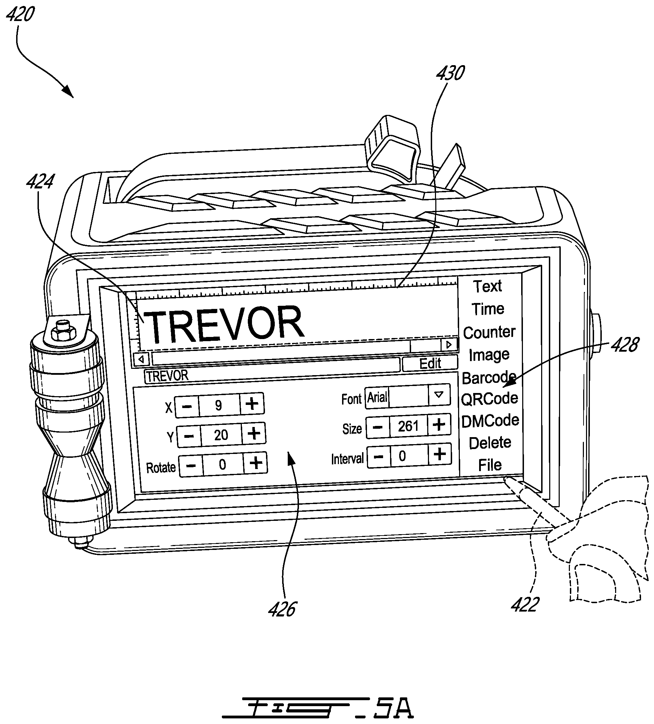

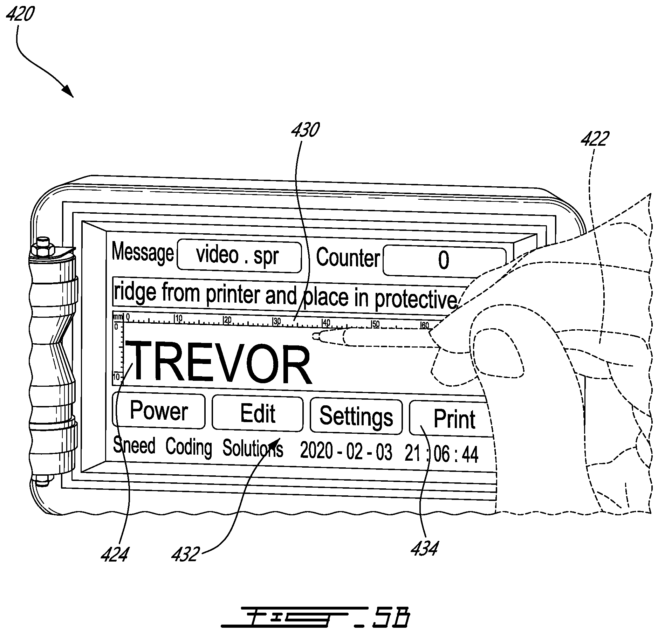

Referring to Figs. 5A-5B, in the shown embodiment the display 420 is a touch screen display, although other means for controlling and interacting with the printing device 400 may be contemplated as well. A user may interact with the display 420, illustratively via an input device 422 such as a stylus, to input a design to be printed, illustratively the name "TREVOR", into a text box 424. Alternatively, the user may use their fingers to interact with the display 420. The display may provide a variety of options for the user with regards to the printing of the design(s). For instance, one or more text options 426 may be available for selecting the positioning, sizing, colour, and/or font type of a series of characters (for example a player or team name) to be printed on the namebar 210. In some embodiments, one or more of the text options 426 may be pre-selected to ensure the printed design(s) properly fit on the namebar(s) 210. For example, the values X = 9, Y = 20, Rotate = 0, Font = Arial, Size = 261 and Interval = 0 may provide optimal design sizing for a given namebar 210, although other such values may be contemplated as well. The display 420 may additionally provide navigation options 428 for navigation through different menus, modes and settings of the printing device 400. A ruler 430 may be provided adjacent the text box 424, illustratively above the text box 424 with units in millimetres, to indicate the length of the inputted design. Other positions and units for the ruler 430 may be contemplated as well. In the shown embodiment, the inputted phrase "TREVOR" would indicate a length of roughly thirty-eight millimetres on the ruler 430. Although the shown ruler 430 shows a maximum length for the text box 424 as being approximately seventy-five millimeters, other maximum lengths may be contemplated as well. As can be seen in Fig. 5B, once a desired design, illustratively the name "TREVOR", has been selected, a user may navigate to a different screen on the display 420 to prepare for the printing process. The user may take note of the length of the design based on the ruler 430 to aid in aligning the aligning device 300 on the hockey stick 200, as will be discussed in further detail below. Additional options 432 such as editing the inputted design may be provided. In other embodiments, a design created on an additional device, for instance a personal computer (not shown), may be loaded or imported onto the printing device 400, for instance via communication port 414, for printing on the hockey stick 200. When ready to print the design, the user may select the "print" icon 434 to begin the printing process, as will be discussed in further detail below.

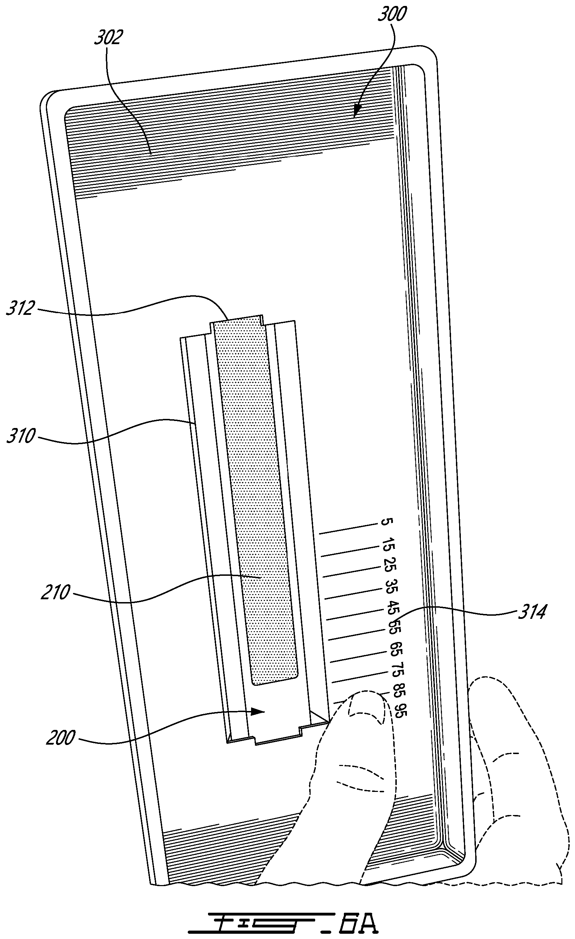

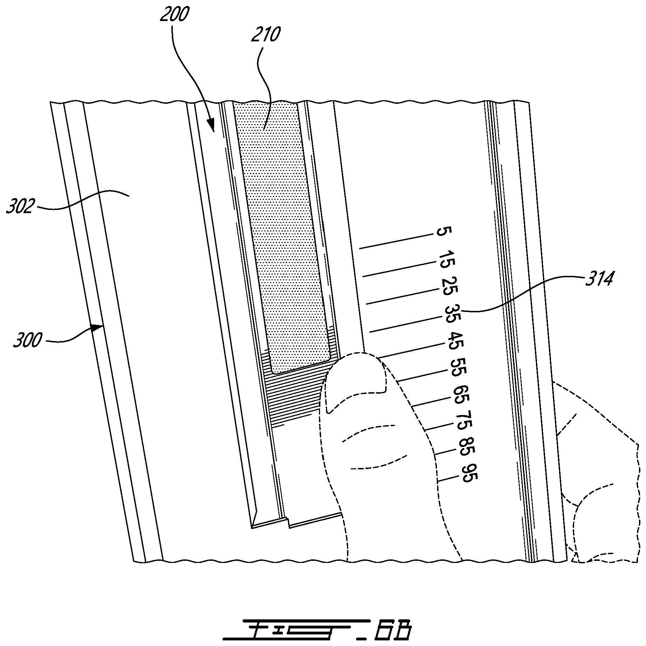

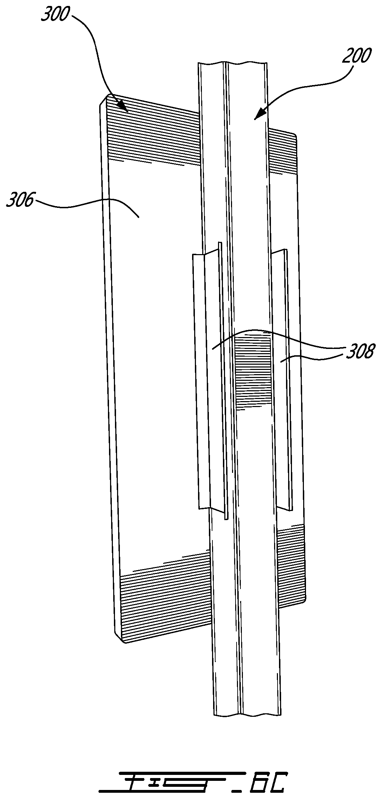

Referring to Figs. 6A-6C, as discussed above, the aligning device 300 is placeable or mountable onto the hockey stick 200 to aid in printing the design(s) correctly on the namebar 210, according to various methods for printing one or more designs on the hockey stick 200 taught by the present disclosure. As shown, the bottom surface 306 of the aligning device 300 may be placed against the outer surface of the shaft 202 on which the namebar 210 is located, the shaft 202 straddled by the flanges 308, the cutout portion 310 exposing the namebar 210. For proper alignment, one of the alignment cutouts 312, illustratively the upper alignment cutout 312 in Fig. 6A, may align with the namebar 210 to ensure the subsequently-printed design is centrally printed on the namebar 210 with respect to the namebar width W₂₁₀. In other cases, the lower alignment cutout 312 may be used for such alignment purposes. Once the aligning device 300 is mounted to the hockey stick 200 and centered, the aligning device 300 may be slid upward or downward along the shaft 202 to properly align the aligning device 300 with the namebar 210 relative to the namebar height H₂₁₀ for printing, for instance by using the ruled markings 314. Illustratively, to accommodate the chosen name "TREVOR", the aligning device 300 may be slid so that the ruled markings 314 generally corresponding to thirty-eight millimeters (as per the ruler 430 on the display 420) line up with the lower edge of the namebar 210. Other aligning means may be contemplated as well. As discussed above, in some embodiments, the flanges 308 may be flexible so that the aligning device 300 may be slid upward or downward along the shaft 202, yet rigid enough that once a desired position for the aligning device 300 has been reached, the aligning device 300 will not inadvertently reposition itself.

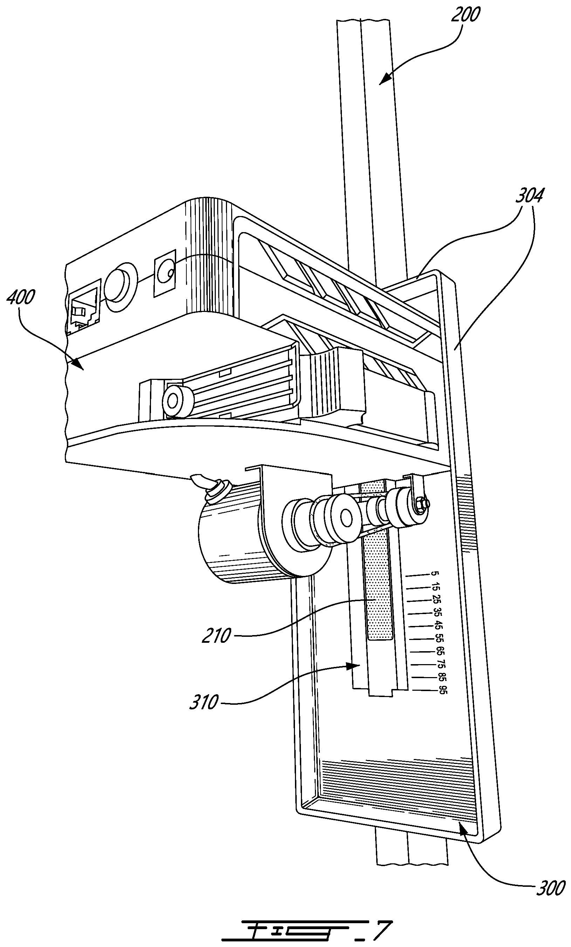

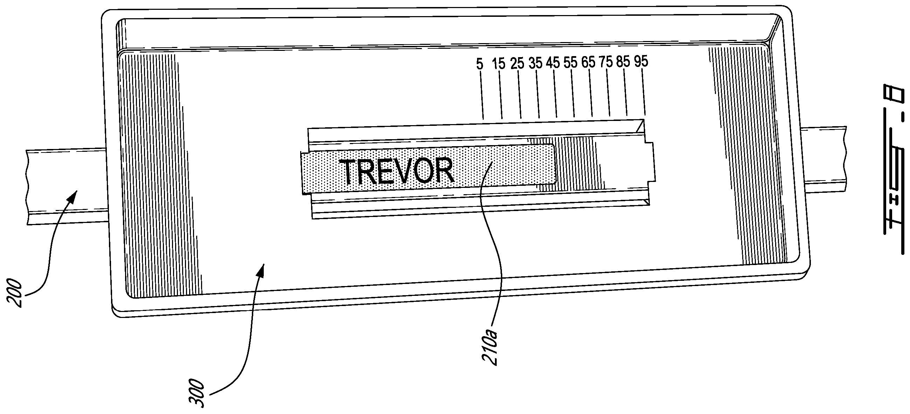

Referring to Fig. 7 and 8, once the aligning device 300 is positioned on the hockey stick 200 and the printing device 400 is prepared for printing, the printing device 400 may be received within the aligning device 300, as per one of the various methods taught by the present disclosure for printing one or more designs on the hockey stick 200. In the shown embodiment, the printing device 400 is positioned against the upper outer wall 304 of the aligning device 300 and is snugly received between lateral outer walls 304 of the aligning device. The outer walls 304 thus may act as retaining means for the printing device 400. The nozzle(s) 416 may be aligned with the cutout portion 310 and the rollers 406 may engage with the top surface 302 of the aligning device 300. When ready, a user may press and release the trigger 418 (or otherwise engage the printing device 400) and rolling the printing device 400 along the top surface 302 of the aligning device, the printing device 300 printing the selected design on the namebar 210. In some cases, the printing device 400 is operable to continuously inject ink onto the namebar 210 as the rollers 406 roll along the top surface 302. Once the design has been fully printed, the user may remove the printing device 400, revealing a printed namebar 210a including the design previously selected via the printing device 400.

Still referring to Fig. 8, in the shown embodiment the shown printed namebar 210a includes the name "TREVOR" previously entered into the printing device 400. In other cases, the printing device 400 may be used to select one or more different designs to be printed. For instance, different athletes may choose to have their own names printed on their hockey sticks 200. In other cases, an entire team may choose to have a team logo, slogan, or other identifier printed on each of their hockey sticks 200. In other cases, the printing device 400 may be configured to print designs other than words, such as images or graphics. Other types of designs may be contemplated as well. In addition, as discussed above, while the shown assembly 100 includes a hockey stick 200 on which a design is to be printed, other hockey equipment, or equipment for other sports such as lacrosse or soccer may be provided for customized printing. In some cases, as the printing via the printing device 400 and aligning device 300 is a post-manufacturing customization process, a plurality of hockey sticks 200 (or other such sporting equipment) may be manufactured without such customization, and then may be rapidly customized at a subsequent time and/or location when a client has made a purchase.

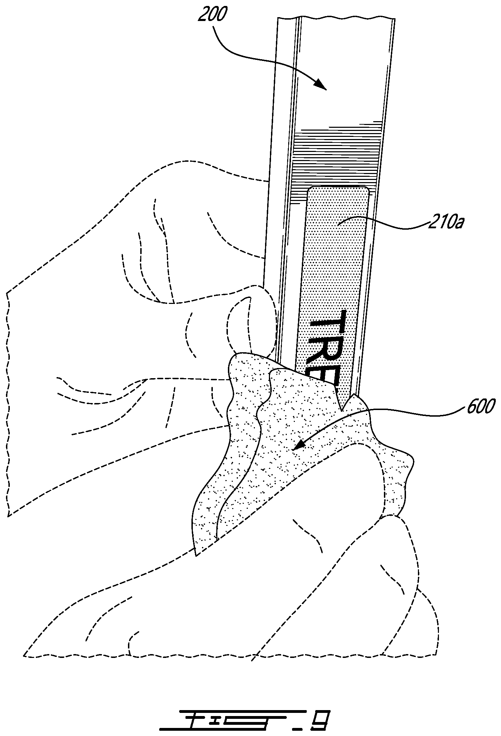

Referring to Fig. 9, in some cases a user may wish to remove a printed design from the printed namebar 210a. For instance, an error may occur in the printing process leading to a misspelled name, a misaligned design, a poor quality printing, etc. In other cases, a user may purchase an already-customized hockey stick 200 or receive one second-hand and wish to remove the already-printed design. In such cases, a dry eraser 600, illustratively a Magic Eraser^{TM} (although other dry erasers may be contemplated as well), may be used to remove the design from the printed namebar 210a, allowing the printing process to recommence or the hockey stick 200 to be used without customization. In some cases, the use of dry erasers such as the Magic Eraser^{TM} may be preferred to remove a printed design from a printed namebar 210a on a piece of sporting equipment, for instance a hockey stick, having a clear coat-type material layer acting as a protecting covering. Various combinations of namebar materials and ink types that may allow the printed design to be erased may be contemplated as well.

As can be seen therefore, the examples described above and illustrated are intended to be exemplary only. The scope is indicated by the appended claims.

Aspects and embodiments of the present invention may further be described by the following items:
Item 1: A method of manufacturing a piece of sporting equipment, comprising:
   affixing a namebar to a surface of the sporting equipment, the namebar being blank and adapted to receive thereon a printed design;
   applying a solvent-based clear coat to the surface of the sporting equipment including the namebar, subsequent to the affixing of the namebar;
   applying a removable covering over the namebar, subsequent to the applying of the solvent-based clear coat; and then
   applying a gripping material to at least a portion of the surface of the sporting equipment including the removable covering over the namebar, subsequently to the applying of the removable covering.
Item 2: The method of manufacturing as defined in item 1, wherein affixing the namebar to the surface of the sporting equipment includes affixing the namebar to a shaft of a hockey stick.
Item 3: The method of manufacturing as defined in item 2, wherein affixing the namebar to the shaft of the hockey stick further includes affixing a lower edge of the namebar at a position between 10 and 100 centimeters from an end of the shaft of the hockey stick.
Item 4: The method of manufacturing as defined in any one of items 1 to 3, further comprising removing the removable covering subsequently to the applying of the gripping material to the surface of the sporting equipment.
Item 5: The method of manufacturing as defined in any one of items 1 to 3, wherein applying the solvent-based clear coat to the surface of the sporting equipment includes applying the solvent-based clear coat having urethane as an component thereof.
Item 6: The method of manufacturing as defined in any one of items 1 to 5, wherein applying the solvent-based clear coat to the surface of the sporting equipment includes applying the solvent-based clear coat having a specific hardness of approximately 80D.
Item 7: A hockey stick, comprising:
   a shaft extending between an upper end and a lower end, the shaft including an outer surface having a namebar configured for acceptance of a printed design, the namebar disposed at a location on the outer surface of the shaft, the shaft further including a gripping material covering at least a portion of the outer surface excluding the location at which the namebar is disposed, wherein the namebar is free of the gripping material.
Item 8: The hockey stick as defined in item 7, wherein the namebar is covered by a solvent-based clear coat.
Item 9: The hockey stick as defined in item 8, wherein the solvent-based clear coat includes urethane as a component thereof.
Item 10: The hockey stick as defined in item 8, wherein the solvent-based clear coat has a specific hardness of approximately 80D.
Item 11: The hockey stick as defined in any one of items 7 to 10, wherein the namebar has a rectangular shape.
Item 12: The hockey stick as defined in item 7, wherein a lower edge of the namebar is disposed between 10 and 100 centimeters from one of the lower end and the upper end of the shaft.
Item 13: An aligning device for a printing device configured for printing a design on a blank namebar on a surface of a piece of sporting equipment, the aligning device comprising:
   a body having a top surface, a bottom surface, and a cutout portion extending from the top surface to the bottom surface; and
   a pair of flanges extending outwardly from the bottom surface of the body, the pair of flanges configured for mounting the aligning device to the sporting equipment;
   wherein the top surface is configured for receiving the printing device and the cutout is positionable to expose the namebar to a nozzle of the printing device.
Item 14: The aligning device as defined in item 13, wherein the body further includes outer walls extending from the top surface of the body, the outer walls configured for retaining the printing device in place.
Item 15: The aligning device as defined in item 13, wherein the top surface of the body includes ruled markings adjacent the cutout portion.
Item 16: The aligning device as defined in item 13, wherein the cutout portion has a generally rectangular shape with indentations along upper and lower edges of the cutout portion.
Item 17: A namebar printer assembly for printing a design via a printing device, the namebar printer assembly comprising:
   a piece of sporting equipment having a blank namebar on a surface thereof; and
   an aligning device having a cutout portion, fixing means for mounting the aligning device to the sporting equipment, and retaining means for retaining the printing device in place for printing, the fixing means operable to adjust the positioning of the aligning device relative to the namebar to align the cutout portion with the namebar, exposing the namebar to a nozzle of the printing device for printing the design.
Item 18: The namebar printer assembly as defined in item 17, wherein the piece of sporting equipment is a hockey stick and the blank namebar is affixed to an outer surface on a shaft of the hockey stick.
Item 19: The namebar printer assembly as defined in item 18, wherein a lower edge of the blank namebar is affixed at a position between 20 and 100 centimeters from a lower end of the shaft of the hockey stick.
Item 20: The namebar printer assembly as defined in any one of items 17 to 19, wherein the piece of sporting equipment is covered by a gripping material to a surface thereof excluding a location of the blank namebar.
Item 21: The namebar printer assembly as defined in any one of items 17 to 20, wherein the blank namebar is covered by a solvent-based clear coat.
Item 22: The namebar printer assembly as defined in item 21, wherein the solvent-based clear coat includes urethane as a component thereof.
Item 23: The namebar printer assembly as defined in item 21 or 22, wherein the solvent-based clear coat has a specific hardness of approximately 80D.
Item 24: The namebar printer assembly as defined in any one of items 17 to 23, wherein the blank namebar has a rectangular shape.
Item 25: The namebar printer assembly as defined in any one of items 17 to 24, wherein the fixing means of the aligning device include a pair of flanges extending outwardly from a bottom surface of a body of the aligning device, the pair of flanges configured for mounting the aligning device to the piece of sporting equipment.
Item 26: The namebar printer assembly as defined in any one of items 17 to 25, wherein the retaining means of the aligning device include outer walls extending from a top surface of a body of the aligning device, the outer walls configured for retaining the printing device in place.
Item 27: The namebar printer assembly as defined in any one of items 17 to 26, wherein a top surface of a body of the aligning device includes ruled markings adjacent the cutout portion.
Item 28: The namebar printer assembly as defined in any one of items 17 to 27, wherein the cutout portion has a generally rectangular shape with indentations along upper and lower edges of the cutout portion.
Item 29: The namebar printer assembly as defined in item 28, wherein the indentations along the upper and lower edges of the cutout portion have widths that generally coincide with the width of the blank namebar.

## Claims

1. A method of finishing a piece of sporting equipment, such as a hockey stick, the method comprising:
affixing a namebar to a surface of the sporting equipment, the namebar being blank and adapted to receive thereon a printed design;
applying a solvent-based clear coat to the surface of the sporting equipment including the namebar, subsequent to the affixing of the namebar;
applying a removable covering over the namebar, subsequent to the applying of the solvent-based clear coat; and then
applying a gripping material to at least a portion of the surface of the sporting equipment including the removable covering over the namebar, subsequently to the applying of the removable covering.

2. The method as defined in claim 1, wherein affixing the namebar to the surface of the sporting equipment includes affixing the namebar to a shaft of a hockey stick.

3. The method as defined in claim 2, wherein affixing the namebar to the shaft of the hockey stick further includes affixing a lower edge of the namebar at a position between 10 and 100 centimeters from an end of the shaft of the hockey stick.

4. The method as defined in any one of the preceding claims, further comprising removing the removable covering subsequently to the applying of the gripping material to the surface of the sporting equipment.

5. The method as defined in any one of the preceding claims, wherein applying the solvent-based clear coat to the surface of the sporting equipment includes applying the solvent-based clear coat having urethane as a component thereof.

6. The method as defined in any one of the preceding claims, wherein applying the solvent-based clear coat to the surface of the sporting equipment includes applying the solvent-based clear coat having a specific hardness of approximately 80D.

7. A hockey stick, comprising:
a shaft extending between an upper end and a lower end, the shaft including an outer surface having a namebar configured for acceptance of a printed design thereon, the namebar being blank and disposed at a location on the outer surface of the shaft, the shaft further including a gripping material covering at least a portion of the outer surface excluding the location at which the namebar is disposed, wherein the namebar is free of the gripping material.

8. The hockey stick as defined in claim 7, wherein the namebar is covered by a solvent-based clear coat.

9. The hockey stick as defined in claim 8, wherein the solvent-based clear coat includes urethane as a component thereof.

10. The hockey stick as defined in claim 8, wherein the solvent-based clear coat has a specific hardness of approximately 80D.

11. The hockey stick as defined in any one of claims 7 to 10, wherein the namebar has a rectangular shape.

12. The hockey stick as defined in claim 7, wherein a lower edge of the namebar is disposed between 10 and 100 centimeters from one of the lower end and the upper end of the shaft.
